# EUROPÄISCHE PATENTSCHRIFT

(11) **EP 1 437 011 B1**
(45) Veröffentlichungstag und Bekanntmachung des Hinweises auf die Patenterteilung: **22.06.2005**
(21) Anmeldenummer: 02782726.0
(22) Anmeldetag: 14.10.2002
(51) Int. Cl.: H04Q 7/00

(54) **VERFAHREN ZUR DURCHFÜHRUNG VON AUGENBLICKLICHEM NACHRICHTENVERKEHR (INSTANT MESSAGING) MIT PAKETVERMITTELTEN DATEN**
METHOD FOR CARRYING OUT INSTANT MESSAGING WITH PACKET SWITCHED DATA
PROCEDE DE MISE EN OEUVRE DE MESSAGERIE INSTANTANEE AU MOYEN DE DONNEES A COMMUTATION PAR PAQUETS

(30) Priorität: 19.10.2001 DE 10151743
(43) Veröffentlichungstag der Anmeldung: 14.07.2004
(73) Patentinhaber: SIEMENS AKTIENGESELLSCHAFT, 80333 München (DE)
(72) Erfinder: JERBI, Behlhassen, 85551 Kirchheim (DE); LAUMEN, Josef, 31141 Hildesheim (DE); SCHMIDT, Andreas, 38114 Braunschweig (DE); TRAUBERG, Markus, 38159 Velchede (DE); VAN NIEKERK, Sabine, 38228 Salzgitter (DE)
(86) Internationale Anmeldenummer: PCT/DE2002/003893
(87) Internationale Veröffentlichungsnummer: WO 2003/036995

(56) Entgegenhaltungen:
- WO-A-00/64203
- WO-A-00/78080
- WO-A-01/76120
- WO-A-99/05828
- WO-A-99/48310
- SEVANTO J: "Multimedia messaging service for GPRS and UMTS" WIRELESS COMMUNICATIONS AND NETWORKING CONFERENCE, 1999. WCNC. 1999 IEEE NEW ORLEANS, LA, USA 21-24 SEPT. 1999, PISCATAWAY, NJ, USA,IEEE, US, 21. September 1999 (1999-09-21), Seiten 1422-1426, XP010353642 ISBN: 0-7803-5668-3

## Beschreibung

Die Erfindung bezieht sich auf ein Verfahren zur sofortigen Übertragung von Daten mindestens einer Dateninhaltsart zwischen mindestens zwei über ein Netzwerk miteinander verbundenen Endgeräten nach dem Oberbegriff von Anspruch 1.

Ein solches Verfahren ist bei weiter Auslegung aus der WO 00/78080 A1 bekannt.

Augenblicklicher oder sofortiger Nachrichtenverkehr ("Instant Messaging") ist bereits, im Internet bekannt und dient beispielsweise zur sofortigen Übertragung von Nachrichtendaten von einem mobilen Endgerät zu einem weiteren Benutzer oder einer geschlossenen Benutzergruppe. Im einzelnen sind als Dateninhaltsarten beispielshalber der Austausch von Nachrichten, der Austausch von Informationen über die Verfügbarkeit der Gesprächsteilnehmer, die Definition von Benutzergruppen ("Chat"-Räume) und die gemeinsame Nutzung von im Netzwerk abgelegten Dateien durch eine geschlossene Benutzergruppe zu erwähnen. Die letztgenannten vier Informationsdienste können entweder zu einem Dienst zur sofortigen Übertragung von Daten mit mehreren Dateninhaltsarten zusammengefaßt sein oder jeder Datenihhaltsart ist ein gesonderter Dienst zugeordnet.

Derzeit wird in den Standardisierungsgremien 3GPP und WAP Forum die Einführung des Dienstes zur sofortigen Übertragung von patektvermittelten Daten, wie Nachrichtendaten, diskutiert. Spezifische Lösungsmöglichkeiten zur Umsetzung und insbesondere zur Gebührenerfassung ("charging") des aus dem Internet bekannten Dienstes auf Mobilfunksysteme der dritten Generation, wie UMTS ("Universal Mobile Telecommunications Standard"), sind jedoch bisher noch nicht erarbeitet worden.

Es besteht daher die Aufgabe, ein Verfahren zur sofortigen Übertragung paketvermittelter Daten mindestens einer Dateninhaltsart zwischen mindestens zwei über ein paketvermittelndes Netzwerk miteinander verbundenen Endgeräten zu schaffen.

Diese Aufgabe wird gelöst durch ein Verfahren zur sofortigen Übertragung paketvermittelter Daten mindestens einer Dateninhaltsart zwischen mindestens zwei über ein paketvermittelndes Netzwerk miteinander verbundenen Endgeräten, bei dem beim Aufbau einer Kommunikationsverbindung zwischen den mindestens zwei Endgeräten jedem an der Kommunikationsverbindung beteiligten Element des Netzwerks ein für die mindestens eine Dateninhaltsart spezifisches Informationselement übermittelt wird.

Wesentliches Merkmal der Erfindung ist es, dass jedem, an der Kommunikationsverbindung zwischen beispielsweise zwei Endgeräten beteiligten Element des Netzwerks, der Zweck der beabsichtigten Datenübertragung mitgeteilt wird. Hieraus ergibt sich der Vorteil, dass jedes beteiligte Element des Netzwerkes eine spezifische Behandlung von Datenpaketen vornehmen kann, die der sofortigen Übertragung von Daten zugehörig sind. Gleichzeitig unterstützt das Verfahren die immer mehr an Bedeutung gewinnende Aufrechterhaltung der Übertragung von beispielsweise Nachrichten-Daten im Falle des sogenannten "Roaming", d.h. einer Übertragung zwischen verschiedenen Mobilfunknetzen unterschiedlicher Netzbetreiber. Allgemein gestattet es das Verfahren, eine in bezug auf die Dateninhaltsart spezifische Verwaltung oder Bearbeitung von Datenpaketen vorzunehmen, wozu insbesondere auch die Gebührenerfassung gehört.

Bei einer bevorzugten Ausführungsform ist das paketvermittelnde Netzwerk mit dem "General Paket Radio Service" (GPRS) ausgestattet und weist die Netzelemente "Gateway GPRS Support Node" (GGSN) und "Serving GPRS Support Node" (SGSN) auf.

Der Dienst GPRS, insbesondere seine logische Architektur, Mobilitätsverwaltung und Protokollarchitektur, ist in dem Fachbuch "Informationstechnik/Mobilfunknetze und ihre Protokolle", von B. Walke, B.G. Teubner, Stuttgart 1998, beschrieben. Sofern der GPRS benutzt wird, sind zwei wesentliche Netzelemente, die an einer Kommunikationsverbindung beteiligt sind, das SGSN und das GGSN, zwischen denen gekapselte Datenpakete und anfallende Signalisierungsinformation mit Hilfe eines Tunnelprotokolls, dem "GPRS Tunnel Protocol" (GTP), übertragen werden. Zu der anfallenden Signalisierungsformation gehören Informationselemente, von denen erfindungsgemäß eines bei der vorliegenden Ausführungsform dem GGSN und dem SGSN mitteilt, dass die Kommunikationsverbindung zur sofortigen Übertragung paketvermittelter Daten dient.

Bevorzugt ist das Informationselement ein Endbenutzer-Adresseninformationselement, das eine für die mindestens eine Dateninhaltsart spezifische PDP-Typennummer umfasst, welche den Paketdatenprotokoll-Typ (PDP) festlegt. Sobald eine Mobilstation in den Paketdatendienst GPRS eingebucht ist, können mit dem SGSN ein oder mehrere PDP-Kontexte für das neue Endbenutzer-Adresseninformationselement ausgehandelt werden, das eine für sofortige Übertragung von Daten spezifische PDP-Typennummer umfasst.

Hinsichtlich der Art des Inhalts der paketvermittelten Daten sind verschiedene Alternativen denkbar. Die Daten können Nachrichten, Informationen über die Verfügbarkeit der Benutzer der mindestens zwei Endgeräte, Informationen über mindestens eine zusammengehörige Gruppe von Benutzern der Endgeräte und Informationen über die Möglichkeit gemeinsamer Nutzung von mindestens einer im Netzwerk abgelegten Datei durch mindestens eine zusammengehörige Gruppe von Benutzern der Endgeräte enthalten. Auch Dateninhaltsartkombinationen sind möglich.

Sofern mehrere Dateninhaltsarten vorgesehen sind, ist bevorzugt jeder Dateninhaltsart ein verschiedenes Informationselement zugeordnet, so dass in dem Fall, wenn das Informationselement ein Endbenutzer-Adresseninformationselement ist, mehrere Endbenutzer-Adresseninformationselemente vorgesehen sind, die sich durch jeweilige PDP-Typennummern unterscheiden.

Die Erfindung wird nachfolgend anhand von Ausführungsbeispielen noch näher erläutert. Es zeigen:
Fig. 1 Eine schematische Darstellung eines Endbenutzer-Adresseninformationselementes,
Fig. 2, 3, 4, 5 jeweils schematische Darstellungen von Endbenutzer-Adresseninformationselementen für verschiedene Dienste mit sofortiger Übertragung von Daten,
Fig. 6 eine Netzübersicht bei paketvermittelten Datendiensten mit Anbindung eines Servers,
Fig. 7 eine schematische Darstellung eines Netzwerkes zur Übertragung einer Server-IP-Adresse für sofortige Übertragung von Daten von einem Mobiltelefon zum GGSN,
Fig. 8 eine schematische Darstellung einer alternativen Ausführungsform zur Übertragung einer Server-IP-Adresse und
Fig. 9 eine schematische Darstellung einer weiteren Ausführungsform zur Übertragung einer Server-IP-Adresse von einem RADIUS zum GGSN.

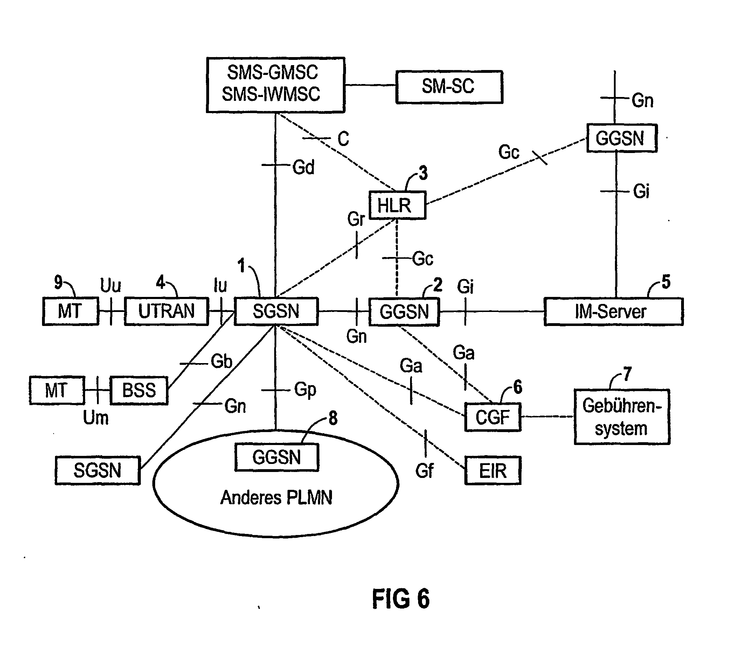

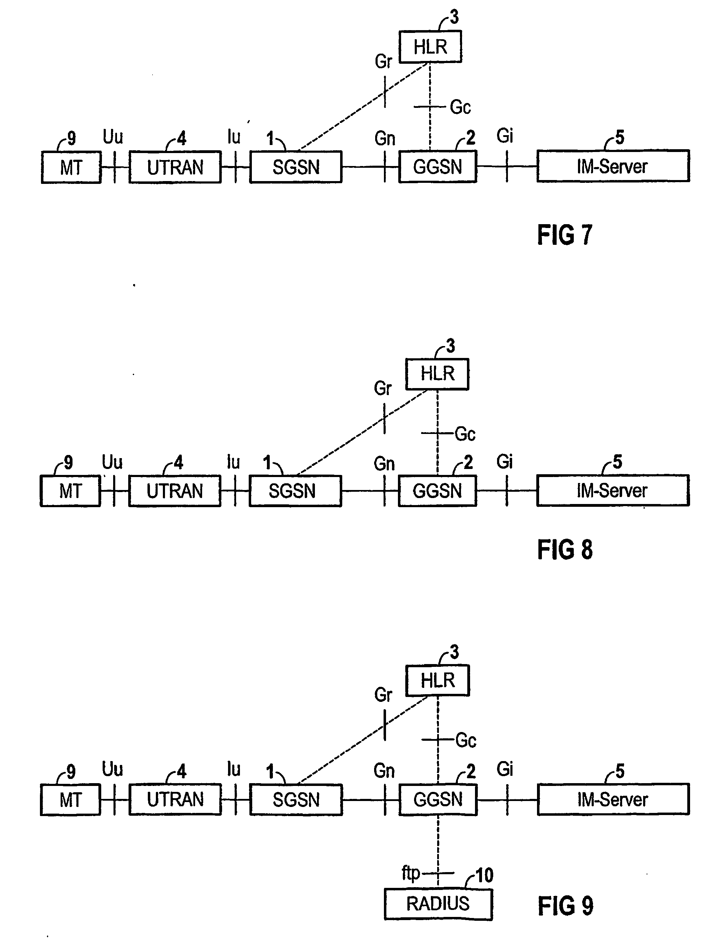

Fig. 6 zeigt eine Übersicht eines paketvermittelnden Netzwerkes eines "General Paket Radio Service" (GPRS) oder eines "Universal Mobile Telekommunications System" (UMTS). In der Figur 6 bezeichnet eine punktierte Linie eine Signalisierungsschnittstelle, während eine durchgezogene Linie eine Signalisierungs- und Datentransfer-Schnittstelle anzeigt. Gleiches gilt für die Figuren 7 bis 9. Ein erstes Netzelement SGSN 1 dient zur Auswertung der Paketdatenprotokolladressen. Die Datenpakete werden entkapselt und an ein zweites Netzelement GGSN 2 versendet, das seinerseits die Weiterleitung zu einem Paketdatennetzwerk (PDN) auslöst.

Das erste Netzelement SGSN 1 dient zur funktionalen Unterstützung der Mobilstation MT. Hier werden beispielsweise die Adressen der Teilnehmer eines Gruppenrufes aus einem dritten Netzelement HLR 3 abgefragt.

Das Mobiltelefon MT 9 ist über ein terrestrisches Funkzugriffsnetzwerk für UMTS UTRAN 4 mit dem ersten Netzelement SGSN 1 unter Benutzung zweier zwischenliegender Schnittstellen Iu und Uu verbunden. Das zweite Netzelement GGSN 2 ist mit dem ersten Netzelement SGSN 1 über eine Schnittstelle Gn verknüpft. Das zweite Netzelement GGSN 2 ist außerdem über eine Schnittstelle Gi mit einem Server 5 für sofortige Übertragung von Nachrichtendaten (IM-Server) verbunden, über den Nachrichtendaten zwischen zwei verschiedenen Benutzern des Netzwerkes in Echtzeit ausgetauscht werden können.

Das zweite Netzelement GGSN 2 ist über eine Schnittstelle Ga mit einer Gebührenabwicklungseinrichtung CGF 6 verbunden, die sowohl von dem ersten Netzelement SGSN 1 als auch von dem zweiten Netzelement GGSN 2 Informationen über in Anspruch genommene Dienste erhält und diese an ein Gebührenabrechnungssystem 7 weiterleitet. Die Schnittstellen Ga sind der zuletzt beschriebenen Funktion zugeordnet.

Das erste Netzelement SGSN 1 steht über eine Schnittstelle Gp auch mit einem netzfremden Element 8 in Verbindung, dass in der Fig. 6 mit GGSN eines anderen PLMN bezeichnet ist.

Beim Aufbau einer Kommunikationsverbindung wird ein sogenanntes Tunnelprotokoll, das GPRS Tunnel Protokoll GTP ausgeführt, in dessen Verlauf den an einer Kommunikationsverbindung beteiligten Netzelementen, wie dem ersten und dem zweiten Netzelement SGSN 1, GGSN 2, den Ablauf der Verbindung betreffende Informationselemente zugeleitet werden, wobei zwischen den beteiligten Netzelementen über geeignete Protokolle für die Kommunikationsverbindung erforderliche Einstellungen vorgenommen werden.

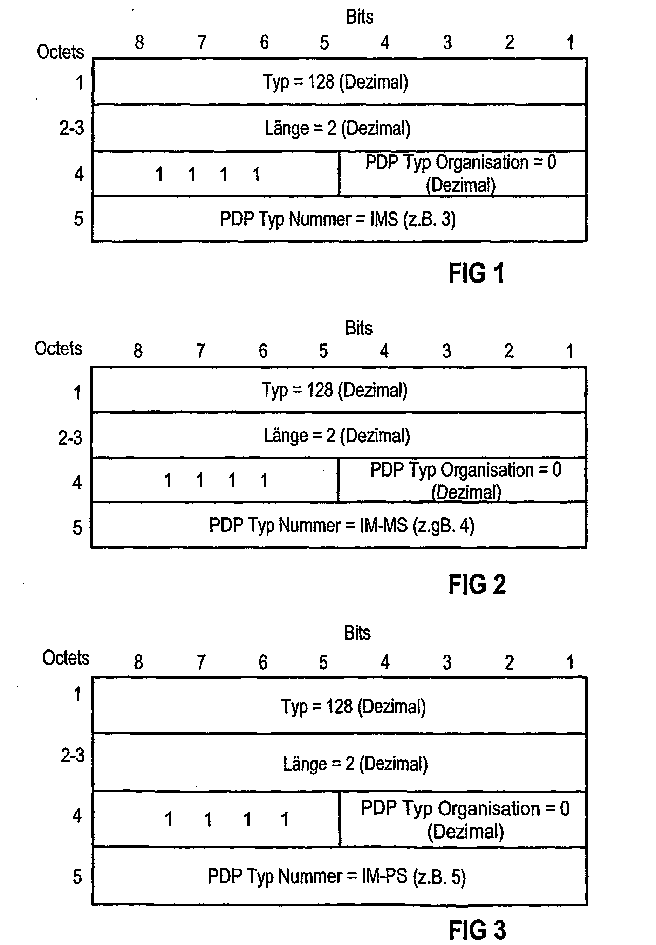

Eines dieser Funktionselemente beinhaltet die Information, dass zu vermittelnde Datenpakete einem Dienst zum sofortigen Nachrichtenverkehr (Instant Messaging) zugehörig sind. Fig. 1 zeigt ein solches Informationselement, dass eine Paketdatenprotokolltypennummer (PDP-Typennummer) enthält, die für Instant Messaging spezifisch und in Fig. 1 mit IMS bezeichnet ist. Als Typennummer ist in Fig. 1 als Beispiel die Ziffer 3 angegeben. Bei dem in Fig. 1 dargestellten Informationselement handelt es sich um ein Endbenutzer-Adresseninformationselement, wobei die Endbenutzeradresse wie bei dem bekannten PDP-Typen PPP über ein PPP (Point-to-Point-Protokoll) ausgehandelt wird.

Die Form des Endbenutzer-Adresseninformationselementes ermöglicht im paketvermittelnden Kernnetzwerk eines Mobilfunksystems, d.h. in dem ersten Netzelement SGSN 1 und dem zweiten Netzelement GGSN 2, eine spezifische Behandlung für Instant Messaging von paketvermittelten Daten. Hierzu gehören beispielsweise für Instant Messaging spezifische Vergebührungsmodelle, eine besondere Behandlung von Datenpaketen, die zum Instant Messaging gehören, in Überlastsituationen, ein spezifisches Routing für Instant Messaging-Datenpakekte innerhalb des Kernnetzwerks oder der Aufbau einer PPP/IP-Verbindung für Instant Messaging-Datenpakete über die Schnittstelle Gi von dem zweiten Netzelement GGSN 2 zu dem IM-Server 5, dessen IP-Adresse über die Endbenutzeradresse für Instant Messaging bestimmt wird.

Da der Aufbau des vorgeschlagenen PDP-Typs IMS unmittelbar keine Endbenutzeradresse für Instant Messaging enthält, muss diese über andere Verfahren vorgegeben oder bestimmt werden. Dies wird später erläutert.

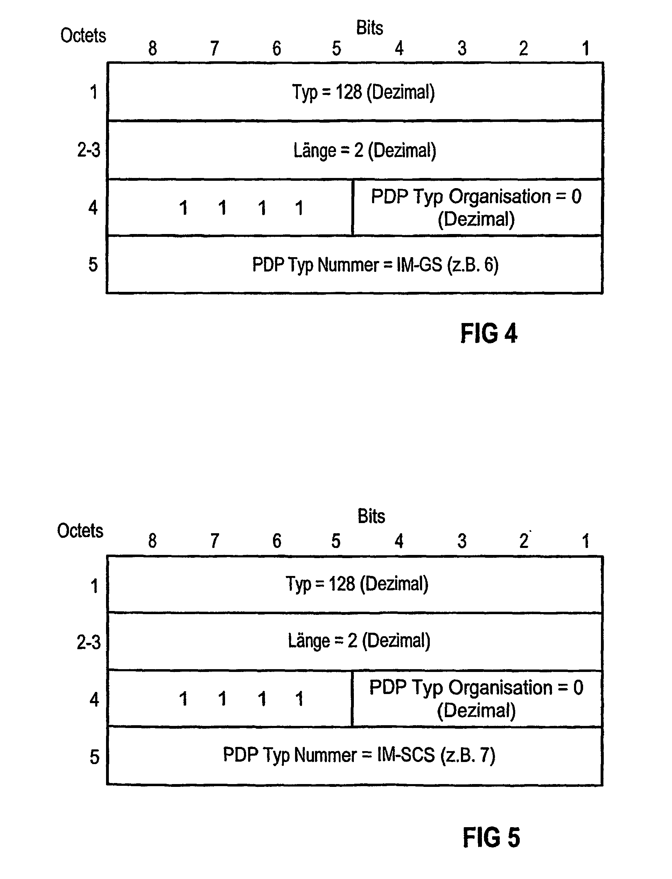

Die Figuren 2 bis 5 betreffen alternative Aufbauten von Endbenutzer-Adresseninformationselementen für den Fall, dass das Instant Messaging in vier Teildienste aufgeteilt ist.

Die einzeln dargestellten Aufbauten unterscheiden sich jeweils durch ihre PDP-Typennummer. Dabei steht IM-MS (4) für einen Nachrichten vermittelnden augenblicklichen Datendienst, IM-PS (5) für einen Präsenzdienst Service, bei dem über das Netzwerk Informationen beispielsweise über die Verfügbarkeit von Netzteilnehmern in Echtzeit ausgetauscht werden können, IM-GS (6) für einen Gruppendienst, bei dem beispielsweise eine Nachricht eines Netzteilnehmers einer vorbestimmten Anzahl weiterer Netzteilnehmer übermittelt und/oder mittels Übersendung von Nachrichten Diskussionen zwischen Netzteilnehmern durchgeführt werden, und IM-SCS (7) bezieht sich auf einen Dienst zum gemeinsamen Nutzen von Inhalten eines Instant Messaging Dienstes, der mit einem eigentlichen Nachrichtenübermittlungsdienst verknüpft sein kann.

Mit den so definierten, neuen PDP-Typen für das Endbenutzer-Adresseninformationselement wird insbesondere den Netzelementen SGSN 1 und GGSN 2 des Kernnetzwerks des Mobilfunksystems die Möglichkeit gegeben, es zu gestatten, dass ein aktivierter PDP-Kontext vom Typ IMS oder alternativ IM-MS, IM-PS, IM-GS oder IM-SCS auch ausschließlich für den jeweils zugeordneten Dienst, wie oben beschrieben, verwendet werden kann. Dies bedeutet, dass ein PDP-Kontext der neudefinierten PDP-Typen nicht für eine Verbindung zu einem beliebigen Internet-Dienstanbieter (ISP)verwendet werden kann, sondern einem ausgewählten Dienst zugeordnet ist.

Nachfolgend werden Alternativen diskutiert, wie die Endbenutzeradresse des Mobiltelefons MT festgelegt werden kann, und zwar anhand der Figuren 7, 8 und 9.

Bei der ersten Ausführungsform nach Fig. 7 wird eine Endbenutzeradresse für Instant Messaging von dem Mobiltelefon MT 9 während einer PDP-Kontextaktivierung über das UTRAN 4 an die paketvermittelnden Netzelemente SGSN 1 und GGSN 2 des Mobilfunksystems übertragen. Das GGSN 2 kann nunmehr unter Verwendung dieser Endbenutzeradresse für Instant Messaging eine Verbindung zu dem IM-Server 5 aufbauen.

Die Endbenutzeradresse für Instant Messaging kann in dem Mobiltelefon MT 9 entweder von dem Benutzer frei konfiguriert werden öder vom Netzbetreiber auf eine USIM-Karte ("Universal Subsriber Identity Module") abgespeichert werden. Die feste Vorgabe der Endbenutzeradresse für Instant Messaging auf dem USIM schränkt den Benutzer des Mobiltelefons bei der Auswahl alternativer Dienstanbieter für Instant Messaging zwar ein, erspart ihm aber auch gleichzeitig umständliches Konfigurieren von Endbenutzeradressen für Instant Messaging. Außerdem kann die feste Vorgabe einer Endbenutzeradresse für Instant Messaging aus der Sicht eines Dienstanbieters für Instant Messaging durchaus gewollt sein, denn dieses Verfahren stellt eine Möglichkeit dar, konkurrierende Serviceprovider für Instant Messaging fernzuhalten.

In einer zweiten Ausführungsform gemäß Fig. 8 wird eine Endbenutzeradresse für Instant Messaging während einer Abfrage der Subskriptionsinformation (vgl. 3 GPP TS 29.002) von dem Netzelement HLR 3 an das erste Netzelement SGSN 1 übertragen. Während einer PDP-Kontextaktivierung kann die Endbenutzeradresse von dem Netzelement SGSN 1 zu dem Netzelement GGSN 2 übertragen werden. Das Netzelement GGSN 2 kann nunmehr unter Verwendung dieser Endbenutzeradresse für Instant Messaging eine Verbindung zu dem IM-Server 5 aufbauen. Der Vorteil dieser Ausführungsform ist es, dass der Netzbetreiber jeder Zeit die Endbenutzeradresse für Instant Messaging verändern oder aktualisieren kann.

Anhand der Fig. 9 wird eine dritte Ausführungsform zum Festlegen der Endbenutzeradresse für Instant Messaging veranschaulicht. Dabei wird davon ausgegangen, dass das Netzelement GGSN 2 eine ungültige Endbenutzeradresse für Instant Messaging erhalten hat, beispielsweise über das UTRAN 4 oder nach einer Überprüfung der Subskription von dem Netzelement HLR 3, die von dem Netzelement GGSN 2 nicht unterstützt wird. In diesem Fall kann das Netzelement GGSN 2 eine Abfrage zu einem Radius-Dienst 10 ("Remote Access dial in user Service") starten, der für die zu transportierenden Datenpakete von Instant Messaging eine Endbenutzeradresse für Instant Messaging bereitstellt. Das Netzelement GGSN 2 kann nunmehr unter Verwendung dieser Endbenutzeradresse für Instant Messaging eine Verbindung zu dem IM-Server 5 aufbauen. Es ist ein Vorteil dieser Ausführungsform zur Festlegung der Endbenutzeradresse für Instant Messaging, dass der Netzbetreiber oder der Diensteanbieter für Instant Messaging jeder Zeit die Endbenutzeradresse für Instant Messaging verändern oder aktualisieren kann.

Es ist hervorzuheben, dass die anhand der Figuren 7 bis 9 beschriebenen Vorgehensweisen zum Festlegen der Endbenutzeradresse für Instant Messaging auf einen Instant Messagingdienst, der aus den oben erwähnten vier Teildiensten besteht, analog anzuwenden sind.

## Patentansprüche

1. Verfahren zur sofortigen Übertragung paketvermittelter Daten mindestens einer Dateninhaltsart zwischen mindestens zwei über ein paketvermittelndes Netzwerk miteinander verbundenen Endgeräten, bei dem
beim Aufbau einer Kommunikationsverbindung zwischen den mindestens zwei Endgeräten jedem an der Kommunikationsverbindung beteiligten Element des Netzwerks ein für die mindestens eine Dateninhaltsart spezifisches Informationselement übermittelt wird,
**dadurch gekennzeichnet, dass**
die Daten Informationen über die Verfügbarkeit der Benutzer der mindestens zwei Endgeräte enthalten.

2. Verfahren nach Anspruch 1,
bei dem das Netzwerk mit dem "General Paket Radio Service" (GPRS) oder dem "Universal Mobile Telecommunikatiorts System" (UMTS) ausgestattet ist und die Netzelemente Gateway GPRS Support Node (GGSN) und "Serving GPRS Support Node" (SGSN) aufweist.

3. Verfahren nach Anspruch 1 oder 2,
bei dem das Informationselement ein Endbenutzer-Adresseninformationselement ist, das eine für die mindestens eine Dateninhaltsart spezifische (PDP) Paketdatenprotokoll-Typennummer umfaßt.

4. Verfahren nach einem der Ansprüche 1 bis 3, bei dem die Daten Nachrichten enthalten.

5. Verfahren nach einem der Ansprüche 1 bis 4, bei dem die Daten Informationen über mindestens eine zusammengehörige Gruppe von Benutzern der Endgeräte enthalten.

6. Verfahren nach einem der Ansprüche 1 bis 5, bei dem die Daten Informationen über die Möglichkeit gemeinsamer Nutzung von mindestens einer im Netzwerk abgelegten Datei durch mindestens eine zusammengehörige Gruppe von Benutzern der Endgeräte enthalten.

7. Verfahren nach einem der Ansprüche 1 bis 6, bei dem mehrere Dateninhaltsarten vorgesehen sind und jeder Dateninhaltsart ein verschiedenes Informationselement zugeordnet ist.

## Claims

1. Method for immediate transmission of packet switched data of at least one data content type between at least two terminals which are connected to one another via a packet switching network, in which,
when a communication link is set up between the at least two terminals, an information element which is specific for the at least one data content type is transmitted to each element of the network which is involved in the communication link,
**characterized in that** the data contains information about the availability of the users of the at least two terminals.

2. Method according to Claim 1,
in which the network is equipped with the "General Packet Radio Service" (GPRS) or the "Universal Mobile Telecommunications System" (UMTS), and has the network elements Gateway GPRS Support Node (GGSN) and "Serving GPRS Support Node" (SGSN).

3. Method according to Claim 1 or 2,
in which the information element is an end user address information element, which comprises a packet data protocol (PDP) type number which is specific for the at least one data content type.

4. Method according to one of Claims 1 to 3, in which the data contains messages.

5. Method according to one of Claims 1 to 4, in which the data contains information about at least one associated group of users of the terminals.

6. Method according to one of Claims 1 to 5, in which the data contains information about the capability for joint use of at least one file, which is stored in the network, by at least one associated group of users of the terminals.

7. Method according to one of Claims 1 to 6, in which two or more data content types are provided, and each data content type is associated with a different information element.

## Revendications

1. Procédé pour la transmission immédiate de données commutées par paquets d'au moins un type de contenu de données entre au moins deux terminaux reliés par l'intermédiaire d'un réseau à commutation par paquets,
dans lequel, lors de l'établissement d'une liaison de communication entre les au moins deux terminaux, on transmet à chaque élément de réseau participant à la liaison de communication un élément d'information spécifique pour l'au moins un type de contenu de données,
**caractérisé par le fait que** les données contiennent des informations sur la disponibilité des utilisateurs des au moins deux terminaux.

2. Procédé selon la revendication 1, dans lequel le réseau est équipé du "General Packet Radio Service" (GPRS) ou du "Universal Mobile Telecommunication Standard" (UMTS) et il comporte les éléments de réseau "Gateway GPRS Support Node" (GGSN) et "Serving GPRS Support Node" (SGSN).

3. Procédé selon la revendication 1 ou 2, dans lequel l'élément d'information est un élément d'information d'adresse d'utilisateur final qui comprend un numéro de type de protocole de données par paquets (PDP) spécifique pour l'au moins un type de contenu de données.

4. Procédé selon l'une des revendications 1 à 3, dans lequel les données contiennent des messages.

5. Procédé selon l'une des revendications 1 à 4, dans lequel les données contiennent des informations sur au moins un groupe fermé d'utilisateurs des terminaux.

6. Procédé selon l'une des revendications 1 à 5, dans lequel les données contiennent des informations sur la possibilité d'une utilisation commune d'au moins un fichier, enregistré dans le réseau, par au moins un groupe fermé d'utilisateurs des terminaux.

7. Procédé selon l'une des revendications 1 à 6, dans lequel plusieurs types de contenu de données sont prévus et un élément d'information différent est associé à chaque type de contenu de données.
